(19) Europäisches Patentamt
European Patent Office
Office européen des brevets

(11) Veröffentlichungsnummer: **0 013 576**
**B1**

(12) # EUROPÄISCHE PATENTSCHRIFT

(45) Veröffentlichungstag der Patentschrift: **12.05.82**

(51) Int. Cl.³: **C 09 B 67/38**

(21) Anmeldenummer: **80100157.9**

(22) Anmeldetag: **14.01.80**

(54) **Verwendung oxalkylierter Novolakharze als Präparationsmittel für Dispersionsfarbstoffe und damit hergestellte Zubereitungen.**

(30) Priorität: **16.01.79 DE 2901461**

(43) Veröffentlichungstag der Anmeldung: **23.07.80 Patentblatt 80/15**

(45) Bekanntmachung des Hinweises auf die Patenterteilung: **12.05.82 Patentblatt 82/19**

(84) Benannte Vertragsstaaten: **BE CH DE FR GB IT NL**

(56) Entgegenhaltungen:
**DE-A-2 520 527**
**DE-A-2 730 223**
**FR-A-1 406 286**
**FR-A-2 143 940**
**FR-A-2 173 311**
**FR-A-2 360 644**
**US-A-2 454 541**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt/Main 80 (DE)**

(72) Erfinder: **Opitz, Konrad, Dr., Schwedenstrasse 22, D-6237 Liederbach (DE)**
Erfinder: **Grossmann, Max, Dr., Martin-Luther-Strasse 65, D-6000 Frankfurt am Main 60 (DE)**
Erfinder: **Kruse, Hubert, Luisenstrasse 33, D-6233 Kelkheim (Taunus) (DE)**
Erfinder: **Schneider, Manfred, Cuntzstrasse 1, D-6239 Eppstein/Taunus (DE)**
Erfinder: **Uhrig, Heinz, Feldbergstrasse 59, D-6374 Steinbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 013 576 B1**

BUNDESDRUCKEREI BERLIN

# Verwendung oxalkylierter Novolakharze als Präparationsmittel für Dispersionsfarbstoffe und damit hergestellte Zubereitungen

Die Erfindung betrifft die Verwendung von wasserlöslichen, durch Anlagerung von Äthylenoxid und/oder Propylenoxid an mehrkernige Novolakharze erhaltene Produkte der allgemeinen Formel (I),

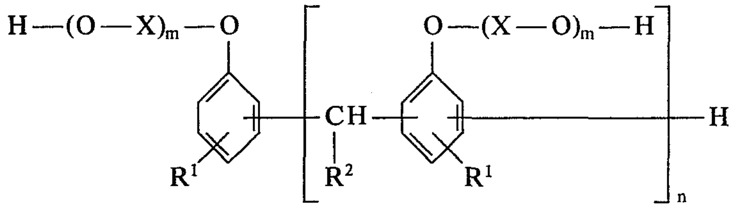

(I)

in der $R^1$ einen geradkettigen oder verzweigten Alkylrest mit 1 bis 18 C-Atomen, $R^2$ Wasserstoff oder $R^1$, X einen Äthylen- und/oder Propylenrest, m eine Zahl von 6 bis 100 und n eine Zahl von 1 bis 12 bedeuten, als Präparationsmittel für Dispersionsfarbstoffe sowie Dispersionsfarbstoffzubereitungen, die durch einen Gehalt an einem solchen Anlagerungsprodukt (I) gekennzeichnet sind.

Die Verwendung von Anlagerungsprodukten von Äthylenoxid und/oder Propylenoxid an mehrkernige Novokalharze als kapillar- und oberflächenaktive Substanzen, wie beispielsweise als Emulsionsspalter und Emulgatoren, als Waschmittel für textile Gegenstände aus Wolle oder Baumwolle und als Hilfsmittel bei der Bearbeitung von Leder, beim Dispergieren von Pigmenten und beim Färben wird in der US-A-2 454 541 beschrieben, aus der auch die Herstellung solcher Anlagerungsprodukte bekannt ist. Pigmente sind gemäß DIN 55 944 und 55 945 im Substrat unlösliche Farbmittel, so daß also für die Feinverteilung eines Pigments im Substrat, beispielsweise in einem Kunststoff oder Lack, ganz spezielle Anforderungen an ein Pigmentdispergiermittel gestellt werden.

Weiterhin ist die Verwendung von Anlagerungsprodukten der Formel (I) aus der DE-C-2 132 405 als Ausgangsmaterial zur Herstellung anionischer Dispergiermittel bekannt.

Die bisher bekannten Eigenschaften dieser Anlagerungsprodukte der Formel (I) ergaben somit keinen Anhaltspunkt dafür, daß sie ausgezeichnete Präparationsmittel für Dispersionsfarbstoffe darstellen, die — als Farbstoffe entsprechend den genannten DIN-Vorschriften — im Substrat, üblicherweise Polyester, löslich sind und somit an ein Dispergiermittel andere Anforderungen stellen. Überraschenderweise erlauben diese Anlagerungsprodukte die Herstellung kochkonzentrierter, dispergiermittelarmer Präparationen von Dispersionsfarbstoffen, wobei sich diese Präparationen durch eine Vielzahl vorteilhafter Eigenschaften auszeichnen.

Die bisher bekannten Zubereitungen von Dispersionsfarbstoffen weisen eine Reihe von Nachteilen auf, die die erfindungsgemäßen Zubereitungen nicht zeigen. So verursachen herkömmliche Zubereitungen von Dispersionsfarbstoffen, die hohe Anteile anionischer Dispergiermittel (in Flüssigeinstellungen 0,5 Gew.-Teile oder mehr und in Pulvereinstellungen 1 Gew.-Teil oder mehr auf 1 Gew.-Teil Dispersionsfarbstoff) enthalten, beim Anrühren von Druckpasten mit synthetischen Verdickungsmitteln einen unerwünschten Abfall der Viskosität. Normalerweise steigt mit zunehmendem Gehalt an Dispergiermittel im Mahl- oder Knetteig auch die Viskosität der Zubereitung stark an, so daß in ungünstigen Fällen, vor allem bei etwas höheren Temperaturen, die Einstellungen dickflüssig oder sogar fest werden. Andererseits kann der Anteil des anionischen Dispergiermittels nicht beliebig verringert werden, da sonst instabile oder von vornherein ungenügend feinverteilte Dispersionen erhalten werden.

In den Färbereien werden aus Rationalisierungsgründen immer kürzere Flottenverhältnisse der Färbebäder angestrebt. Dafür werden möglichst hochkonzentrierte Farbstoffeinstellungen bevorzugt. Die hohen Anteile anionischer Dispergiermittel in herkömmlichen Dispersionsfarbstoffpräparationen können bei modernen Färbeverfahren, wie in der Jet-Färberei, zu unerwünschter Schaumbildung führen. Oft wird auch ein starkes Farbstoffrückhaltevermögen, vor allem bei Klotzfärbungen, beanstandet. In Druckereien bedingt der hohe Dispergiermittelanteil in üblichen Dispersionsfarbstoffpräparationen außer dem schon genannten ungünstigen Einfluß auf die Viskosität der Druckpasten auch ein aufwendiges Nachwaschen der Drucke.

Die vorliegende Erfindung erlaubt es nun, Dispersionsfarbstoffzubereitungen herzustellen, die den genannten Einschränkungen nicht unterworfen sind und sich besonders für eine Reihe von Spezialaufgaben eignen. So können erfindungsgemäß erhaltene wäßrige Dispersionsfarbstoffzubereitungen ohne Qualitätseinbuße zu Pulvern getrocknet werden. Sowohl die Pulver als auch die Flüssigeinstellungen eignen sich hervorragend zum Färben und Bedrucken der verschiedensten Materialien.

Im folgenden werden bevorzugte Ausgestaltungen der Erfindung näher erläutert, wobei sich Prozentangaben auf das Gewicht beziehen:

Bevorzugt werden solche Anlagerungsprodukte der Formel (I), bei denen $R^1$ einen geradkettigen oder verzweigten Alkylrest mit 6 bis 14 C-Atomen, $R^2$ ein Wasserstoffatom, X einen Äthylen- und/oder Propylenrest, m eine Zahl von 10 bis 30 und n eine Zahl von 2 bis 9 bedeuten.

Bevorzugte Zubereitungen enthalten 5 bis 90, insbesondere 30 bis 80% Dispersionsfarbstoff, 2 bis 40%, insbesondere 2 bis 20% eines oder mehrerer Anlagerungsprodukte (I), bis zu 30% anionische Dispergiermittel und bis zu 70% Wasser und/oder übliche Hilfsmittel. Darüber hinaus können die erfindungsgemäßen Zubereitungen andere nichtionogene Dispergiermittel und in solchen Präparationen übliche Zusätze enthalten, beispielsweise als Wasserrückhaltemittel bekannte hygroskopische Mittel, Schaumdämpfer, Entstaubungsmittel oder Konservierungsmittel.

Besonders bevorzugte Präparationen enthalten 30 bis 80% Dispersionsfarbstoff, 3 bis 12% Anlagerungsprodukt (I), bis zu 4% anionische Dispergiermittel und 4–67% Wasser und/oder Hilfsmittel, insbesondere bis zu 20% Wasserrückhaltemittel, beispielsweise Glykol und etwa 25 bis etwa 65% Wasser.

Bevorzugte Pulvereinstellungen enthalten etwa 65 bis etwa 80% Dispersionsfarbstoff, etwa 5 bis etwa 18% Anlagerungsprodukt (I) und etwa 7 bis etwa 30% anionische Dispergiermittel.

Von besonderem Interesse sind hochkonzentrierte Flüssig- und Pulvereinstellungen, die möglichst dispergiermittelarm sind. Bei bevorzugten Flüssigeinstellungen liegt der Gesamtgehalt an Anlagerungsprodukt (I) und anionischem Dispergiermittel bei etwa 3 bis etwa 13%, insbesondere bis etwa 10%. Bei bevorzugten Pulvereinstellungen liegt dieser Gesamtgehalt bei etwa 20 bis etwa 35%, insbesondere etwa 20 bis etwa 30%. Neben dem Farbstoff und den Dispergiermitteln sind somit keine wesentlichen Anteile fremder Stoffe, wie anorganische Salze, zugegen. Sofern die Präparationen noch die genannten oder andere übliche Zusätze enthalten, können diese Additive vor, während oder nach der Feinverteilung der Dispersionsfarbstoffe zugesetzt werden.

Bei den Anlagerungsprodukten (I), die Äthylen- und Propylenoxid-Einheiten X enthalten, kann deren Anordnung innerhalb der Alkylenoxidketten statisch oder in Form von »Blocks« gegeben sein, je nachdem, ob bei der Herstellung ein Gemisch von Äthylen- und Propylenoxid eingesetzt wurde oder ob diese Oxide einzeln nacheinander angelagert wurden.

Sofern die erfindungsgemäßen Präparationen anionische Dispergiermittel enthalten, werden die hierfür üblicherweise verwendeten Dispergiermittel eingesetzt. Bevorzugt sind Kondensationsprodukte aus aromatischen Sulfonsäuren und Formaldehyd, insbesondere Kondensationsprodukte aus Alkylnaphthalinsulfonsäuren, vor allem Methylnaphthalinsulfonsäuren und Formaldehyd, wie sie aus der DE-C-2 442 514 bekannt sind. Geeignet sind auch Kondensationsprodukte aus gegebenenfalls substituiertem Phenol mit Formaldehyd und Natriumsulfit sowie Alkalisalze von Ligninsulfonsäuren.

Im Vergleich zu üblichen Dispersionsfarbstoffzubereitungen zeichnen sich die erfindungsgemäßen Präparationen durch einen sehr geringen Gehalt an oberflächenaktiven Substanzen aus. Die erfindungsgemäß zu verwendenden wasserlöslichen Anlagerungsprodukte (I) zeichnen sich darüber hinaus durch eine gute biologische Abbaubarkeit aus, so daß es zu einer minimalen Abwasserbelastung kommt.

Trotz des geringen Einsatzes an oberflächenaktiven Substanzen erhält man erfindungsgemäße Präparationen, die bei sehr hohem Farbmittelgehalt gut fließfähig und lagerstabil sind.

Wegen der guten Verträglichkeit mit synthetischen Verdickungsmitteln können die Präparationen in Drucktinten für den Rouleauxdruck mit sehr »seichten« Gravuren eingesetzt werden, wobei farbstarke Drucke erhalten werden. Ebenso ist der Einsatz im Rotationsfilmdruck möglich.

Die Herstellung der erfindungsgemäßen Präparationen kann nach allen bekannten Verfahren erfolgen. Zum Beispiel kann ein Dispersionsfarbstoff oder eine Mischung von Dispersionsfarbstoffen mit einem oder mehreren Anlagerungsprodukten (I), gegebenenfalls einem anionischen Dispergiermittel sowie gegebenenfalls anderen Zusätzen vermischt und einer mechanischen Zerkleinerung unterworfen werden. Hierbei kann die Reihenfolge der Zugabe der Komponenten auch verändert werden. Die mechanische Zerkleinerung erfolgt bevorzugt in Knetern, Kugelmühlen, Dispergatoren, Perlmühlen, Sandmühlen oder Attritoren. Das Erreichen der gewünschten Feinverteilung von im allgemeinen etwa 3 µm, bevorzugt 1 µm Teilchengröße kann durch einen Filtertest oder mit dem Mikroskop festgestellt werden. Die so erhaltenen Präparationen enthalten die Farbmittel in stabiler feinverteilter Form.

Die Feinverteilung bleibt auch bei mehrwöchiger Lagerung sowohl bei Raumtemperatur als auch bei 50° C erhalten und wird auch durch Kälteeinwirkung nicht beeinträchtigt.

Zur Herstellung einer pulverförmigen Präparation können wäßrige Präparationen in üblicher Weise, beispielsweise mittels Zerstäubungstrocknung, getrocknet werden. Die so erhaltenen pulverförmigen Präparationen werden durch einfaches Einrühren in Wasser oder in Bindemittellösungen gut redispergiert.

Durch den geringen Gehalt an oberflächenaktiven Substanzen tritt beim Einsatz der erfindungsgemäßen Dispersionsfarbstoffpräparationen in Färbebädern oder Druckpasten keine retardierende Wirkung auf und es werden brillante Farbtöne erhalten. Außerdem kann im Falle des Direktdrucks die erforderliche Nachwäsche wesentlich verkürzt werden oder bei Verwendung körperarmer Verdickungen sogar ganz entfallen, ohne daß es zu einer merklichen Griffverschlechterung der bedruckten Ware käme oder Brillanz und Farbton beeinträchtigt würden. In diesem Falle werden die Präparationen vorteilhaft auf einen pH-Wert von etwa 6 bis 8 eingestellt.

In einer besonders bevorzugten Ausgestaltung der Erfindung werden Dispersionsfarbstoffe eingesetzt, die bei atmosphärischem Druck zwischen 150 und 220° C zu mindestens 60% unzersetzt

sublimieren, insbesondere Dispersionsfarbstoffe aus der Reihe der Mono- oder Disazo-, Anthrachinon-, Chinophthalon-, Nitro-, Azomethin-, Naphthalintetracarbonsäure- oder Benzoxanthenfarbstoffe oder Mischungen solcher Farbstoffe. Die so erhaltenen Präparationen eignen sich zur Herstellung von Druckfarben für das Bedrucken von Transferpapieren für den Thermodruck.

In den folgenden Beispielen beziehen sich Prozentangaben und Teile auf das Gewicht, sofern nichts anderes angegeben ist.

Beispiel 1

350 Teile des Farbstoffs der Formel (1) werden in einer

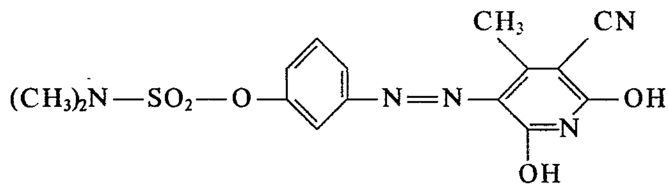

(1)

Lösung von 87 Teilen eines mit 105 Mol Äthylenoxid umgesetzten Novolakharzes, das im Mittel aus 7 über $-CH_2$-Brücken verknüpften Nonylphenolresten besteht (im folgenden »Anlagerungsprodukt A«), in 300 Teilen Wasser und 150 Teilen Äthylenglykol in einer Perlmühle mit Siliquarzitperlen (1 mm ∅) während 3 Stunden unter Kühlung gemahlen. Nach dieser Zeit erhält man eine gut fließfähige Dispersion, deren Teilchen zu über 90% kleiner als 3 µm sind. Die Teigeinstellung wird mit Wasser auf 1000 Teile aufgefüllt und von den Perlen abfiltriert. Die Präparation ist gut fließfähig, über längere Zeit sowohl bei Raumtemperatur als auch bei 50° C lagerstabil und unempfindlich gegen Kälteeinwirkung.

Beispiel 2

400 Teile des Farbstoffs der Formel (1) werden in einer Lösung von 100 Teilen eines mit 45 Mol Äthylenoxid umgesetzten Novokalharzes, das im Mittel aus 3 über $-CH_2$-Brücken verknüpften Nonylphenolresten besteht (im folgenden »Anlagerungsprodukt B«), in 300 Teilen Wasser und 150 Teilen Äthylenglykol in einer Perlmühle mit Siliquarzitperlen (∅ 1 mm) während 3 Stunden unter Kühlung gemahlen. Nach dieser Zeit erhält man eine gut fließfähige Dispersion, deren Teilchen zu über 90% kleiner als 3 µm sind. Die Teigeinstellung wird mit Wasser auf 1000 Teile aufgefüllt und von den Perlen abfiltriert. Die Präparation ist gut fließfähig, über längere Zeit sowohl bei Raumtemperatur als auch bei 50° C lagerstabil und unempfindlich gegen Kälteeinwirkung.

Beispiel 3

400 Teile des trockenen Farbstoffs der Formel (2)

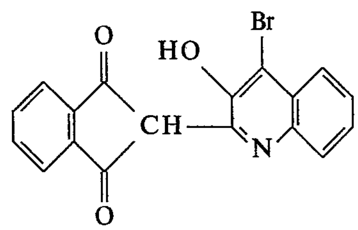

(2)

werden in einer Lösung aus 40 Teilen des Anlagerungsprodukts A, 20 Teilen eines Kondensationsproduktes aus Methylnaphthalinsulfosäure und Formaldehyd, wie es in Beispiel D der DE-C-2 442 514 beschrieben ist (im folgenden »anionisches Dispergiermittel MNF«), 150 Teilen Äthylenglykol, 300 Teilen Wasser und 2 Teilen Chloracetamid als Konservierungsmittel in einer Perlmühle mit Siliquarzitperlen (∅ 1 mm) unter Kühlung gemahlen. Nach 4 Stunden Mahldauer erhält man eine Dispersion, deren Teilchen zu über 90% kleiner als 3 µm sind. Der Mahlteig wird mit Wasser auf 1000 Teile aufgefüllt und von den Perlen abfiltriert. Man erhält eine gut fließfähige Präparation, die sowohl bei Raumtemperatur als auch bei 50°C mehrere Wochen lagerstabil und unempfindlich gegen Kälteeinwirkung ist.

Verwendet man anstelle der in Beispiel 3 genannten Komponenten die in der folgenden Tabelle 1 angegebenen Farbstoffe, Dispergiermittel und übrigen Bestandteile und verfährt im übrigen analog Beispiel 3, so resultieren ebenfalls freifließende, wäßrige, lagerstabile Teigeinstellungen.

Tabelle 1

(Angaben bezogen auf 1000 Teile Präparation, Rest: Wasser)

| Beispiel | Farbstoff | | Anlagerungsprodukt | | Dispergiermittel | | Äthylenglykol | Konservierungsmittel | | Mahldauer (Stunden) |
|---|---|---|---|---|---|---|---|---|---|---|
| | Teile | Nr. | Teile | Art | Teile | Art | Teile | Teile | Art | |
| 4 | 400 | 2 | 40 | C | 20 | MNF | 200 | 4 | CA | 3 |
| 5 | 400 | 2 | 40 | D | 20 | MNF | 200 | 4 | CA | 3 |
| 6 | 400 | 2 | 40 | E | 20 | MNF | 200 | 4 | CA | 4 |
| 7 | 400 | 2 | 40 | F | 20 | MNF | 150 | 4 | CA | 4 |
| 8 | 400 | 2 | 40 | A | 20 | KF | 150 | 3 | P | 3 |
| 9 | 500 | 3 | 60 | A | 40 | MNF | 150 | 2 | CA | 5 |
| 10 | 500 | 3 | 40 | C | 20 | MNF | 150 | 2 | CA | 5 |
| 11 | 500 | 3 | 60 | A | 30 | KF | 150 | 4 | P | 5 |
| 12 | 400 | 4 | 60 | C | 40 | MNF | 200 | 4 | P | 3 |
| 13 | 350 | 5 | 90 | A | 10 | MNF | 150 | 4 | P | 5 |
| 14 | 350 | 5 | 120 | C | 10 | LS | 150 | 3 | P | 5 |
| 15 | 350 | 5 | 50 | G | 10 | MNF | 150 | 4 | P | 4 |
| 16 | 350 | 5 | 120 | A | 10 | KF | 150 | 3 | P | 4 |
| 17 | 350 | 6 | 105 | A | 17,5 | MNF | 150 | 4 | P | 5 |
| 18 | 300 | 6 | 70 | H | 17,5 | MNF | 150 | 4 | P | 6 |
| 19 | 400 | 7 | 30 | A | 6,6 | LS | 200 | 4 | P | 3 |
| 20 | 400 | 7 | 30 | C | 6,6 | LS | 200 | 4 | P | 3 |
| 21 | 400 | 7 | 30 | H | 6,6 | LS | 200 | 4 | P | 3 |
| 22 | 400 | 7 | 30 | J | 6,6 | LS | 200 | 4 | P | 3 |
| 23 | 300 | 8 | 60 | A | 20 | MNF | 200 | 8 | P | 6 |
| 24 | 300 | 8 | 60 | J | 20 | MNF | 200 | 8 | P | 6 |
| 25 | 300 | 9 | 45 | A | 12 | MNF | 150 | 5 | P | 6 |
| 26 | 300 | 9 | 90 | A | 15 | MNF | 150 | 5 | P | 5 |
| 27 | 300 | 9 | 45 | H | 12 | MNF | – | 5 | P | 5 |
| 28 | 300 | 9 | 60 | K | 15 | MNF | – | 5 | P | 5 |
| 29 | 350 | 9 | 70 | L | 15 | MNF | 150 | 4 | P | 4 |

Erläuterungen zu den Tabellen 1 und 2:

a) Die Farbstoffe 3 bis 9 haben folgende Formeln:

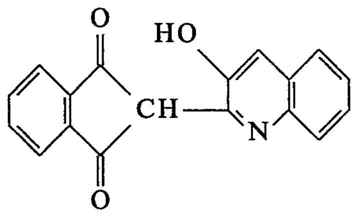

(3)

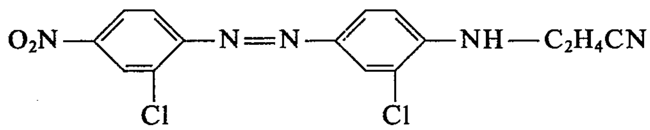

(4)

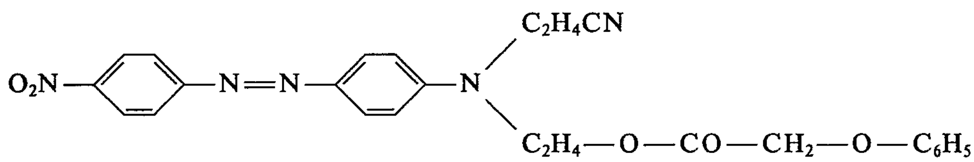

(5)

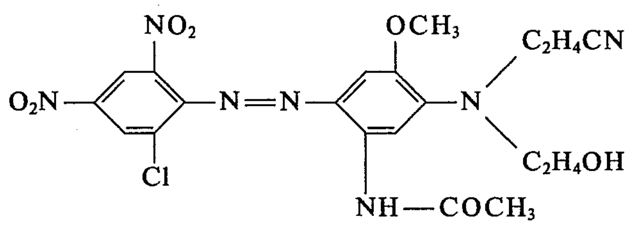

(6)

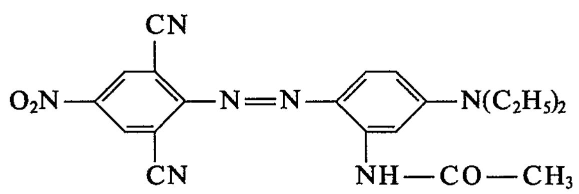

(7)

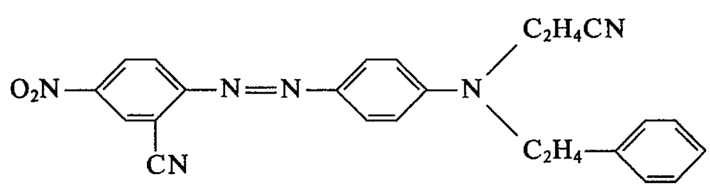

(8)

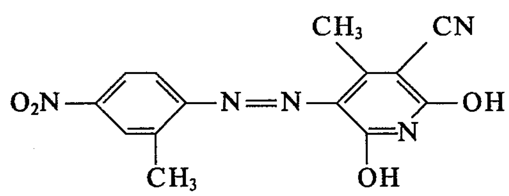

(9)

b) Die Anlagerungsprodukte C – L haben folgende Zusammensetzung:

C: ist ein mit 224 Mol Äthylenoxid umgesetztes Novolakharz, das im Mittel aus 9 über $-CH_2$-Brücken verknüpften Nonylphenolresten besteht.
Entsprechend setzen sich zusammen:
D: 211 Mol Äthylenoxid, 7 Nonylphenolreste
E: 140 Mol Äthylenoxid, 7 Dodecylphenolreste
F: 108 Mol Äthylenoxid, 9 Hexylphenolreste
G: Blockpolymerisat aus 18 Mol Äthylenoxid + 18 Mol Propylenoxid + 18 Mol Äthylenoxid, 9 Nonylphenolreste

H: Blockpolymerisat aus 80 Mol Äthylenoxid + 25 Mol Propylenoxid, 7 Nonylphenolreste
J: 91 Mol Äthylenoxid, 7 Nonylphenolreste
K: 90 Mol Äthylenoxid, 3 Nonylphenolreste
L: ist ein mit 37,5 Mol Äthylenoxid umgesetztes Novolakharz, das im Mittel aus 3 über Isooctylmethylen-Brücken verknüpften o-Kresolresten besteht.

c) Bei den anionischen Dispergiermitteln bedeutet:

KF: Kondensationsprodukt aus Kresol, Formaldehyd und Natriumsulfit (DE-PS 2 032 926)
LS: Ligninsulfonat

d) Konservierungsmittel:

CA: Chloracetamid
P: Pentachlorphenolnatrium

Beispiel 30

400 Teile des trockenen Farbstoffes der Formel (1) werden in einer Lösung aus 30 Teilen Dispergiermittel MNF, 30 Teilen Anlagerungsprodukt A und ca. 300 Teilen Wasser in einer Perlmühle mit Siliquarzitkugeln (∅ 1 mm) gemahlen. Nach 3 Stunden erhält man eine gut fließfähige Dispersion, deren überwiegende Anzahl der Teilchen kleiner als 3 µm ist. Es werden weitere 135 Teile Dispergiermittel MNF und erforderlichenfalls Wasser zugegeben und anschließend der wäßrige Teig durch Zerstäubungstrocknung getrocknet. Die Eingangstemperatur beträgt 160–180°C und die Ausgangstemperatur 70–80°C. Es fällt ein staubarmes Pulver mit einem Farbstoffgehalt von 67% an, welches sich beim Einrühren in eine Stammverdickung oder in ein wäßriges Färbebad gut dispergieren läßt.

Beispiel 31

882 Teile eines feuchten Preßkuchens des Farbstoffes der Formel (3) mit 34% Feststoffgehalt werden mit 60 Teilen Anlagerungsprodukt A und 40 Teilen Dispergiermitteln MNF in einer Perlmühle mit Siliquarzitkugeln (∅ 1 mm) gemahlen. Nach 4 Stunden ist der Farbstoff so fein verteilt, daß die überwiegende Anzahl der Teilchen kleiner als 3 µm ist. Der wäßrige Teig wird in einem Zerstäubungstrockner getrocknet, wobei die Eingangstemperatur 160–180°C und die Ausgangstemperatur 70–80°C beträgt. Es resultiert ein staubarmes, rieselfähiges Pulver mit einem Farbstoffgehalt von 75%, welches sich beim Einrühren in eine Stammverdickung oder in ein wäßriges Färbebad gut dispergieren läßt.

Verwendet man anstelle der in Beispiel 31 genannten Komponenten die in der folgenden Tabelle 2 angegebenen Farbstoffe, Anlagerungsprodukte und anionischen Dispergiermittel und verfährt im übrigen analog Beispiel 31, so resultieren pulverförmige Präparationen mit den angegebenen Farbstoffgehalten und ebenso guten Eigenschaften.

Tabelle 2

| Beispiel | Farbstoff Teile | Farbstoff Nr. | Anlagerungsprodukt Teile | Anlagerungsprodukt Art | Dispergiermittel Teile | Dispergiermittel Art | Mahldauer (Stunden) | Farbstoffgehalt |
|---|---|---|---|---|---|---|---|---|
| 32 | 400 | 1 | 75 | A | 75 | KF | 4 | 73% |
| 33 | 300 | 7 | 56 | A | 45 | MNF | 3 | 75% |
| 34 | 320 | 7 | 60 | H | 48 | MNF | 4 | 75% |
| 35 | 320 | 7 | 70 | A | 30 | KF | 4 | 76% |
| 36 | 320 | 7 | 70 | A | 30 | LS | 4 | 76% |

Beispiel 37

150 Teile der gemäß einem der Beispiele 3, 4 oder 9 hergestellten Präparation werden mit einem Rührer direkt in 850 Teile einer wäßrigen synthetischen Polyacrylat-Stammverdickung eingerührt. Die Viskosität der Verdickung liegt bei 1,5–2 Pas (gemessen mit dem Haake-Viskosimeter VT 02) und ändert sich beim Einrühren der dispergiermittelarmen Präparation nur sehr geringügig.

Die Druckpaste im Rotationsfilmdruck auf Papier oder andere übliche Zwischenträger verdruckt, ergibt nach Übersublimieren bei im Transferdruck üblichen Bedingungen auf Polyestermaterialien ruhige, scharfstehende, egale Drucke.

Verwendet man anstelle der erfindungsgemäßen eine herkömmliche Farbstoffpräparation mit einem höheren Anteil anionischer Dispergiermittel, dann wird die Viskosität der Druckpaste so stark herabgesetzt, daß sie unbrachbar ist.

Beispiel 38

Je 150 Teile der gemäß einem der Beispiele 1, 13 oder 26 hergestellten Präparationen werden mit einem Schnellrührer direkt in 850 Teile einer wäßrigen synthetischen Polyacrylatstammverdickung eingerührt. Die vorher eingestellte Viskosität von ca. 1,5 Pas (Haake Viskosimeter) ändert sich durch die dispergiermittelarme Präparation nur sehr geringfügig. Die Drucktinten eignen sich zum direkten Bedrucken von Polyestermaterialien, wobei die sonst notwendige Nachwäsche wegen des geringen Dispergiermittelanteils entfallen kann. Es resultieren kräftige, echte Drucke guter Egalität.

Beispiel 39

Eine Kreuzspule aus 300 g eines Polyester/Wolle-Garns wird unter wechselnder Flottenzirkulation 1 Stunde bei 106° C und bei einem pH-Wert von 5 unter Verwendung üblicher Färbehilfsmittel in einem Bad gefärbt, welches im Liter Wasser 3,4 g der Präparationen aus Beispiel 1 oder 13 enthält. Nach dem Spülen der Wickelkörper erhält man egale, tiefe Färbungen mit guter Reibechtheit.

Beispiel 40

Mit Färbebädern, die die unter Beispiel 1 oder 13 beschriebenen Präparationen enthalten, erhält man beim HT-Färben mit in der Praxis üblichen Flottenverhältnissen (1 : 10–1 : 30) und Färbebadtemperaturen (125–135° C) egale farbstarke Färbungen auf Polyester bzw. Polyestermischgeweben mit gutem Aufbau.

**Patentansprüche**

1. Verwendung wasserlöslicher Produkte der allgemeinen Formel (I),

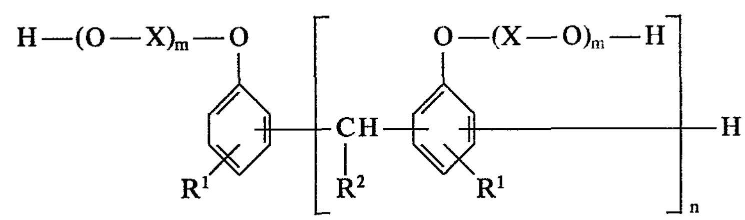

(I)

in der $R^1$ einen geradkettigen oder verzweigten Alkylrest mit 1 bis 18 C-Atomen, $R^2$ ein Wasserstoffatom oder $R^1$, X einen Äthylen- und/oder Propylen-Rest, m eine Zahl von 6 bis 100 und n eine Zahl von 1 bis 12 bedeuten, als Präparationsmittel für Dispersionsfarbstoffe.

2. Dispersionsfarbstoffzubereitungen, gekennzeichnet durch einen Gehalt an einem wasserlöslichen Anlagerungsprodukt der Formel (I) nach Anspruch 1.

3. Zubereitungen nach Anspruch 2, wobei $R^1$ einen geradkettigen oder verzweigten Alkylrest mit 6 bis 14 C-Atomen, $R^2$ ein Wasserstoffatom, X einen Äthylen- und/oder Propylen-Rest, m eine Zahl von 10–30 und n eine Zahl von 2 bis 9 bedeuten.

4. Zubereitungen nach Ansprüchen 2 und 3, enthaltend

5–90% Dispersionsfarbstoff,
2–40% Anlagerungsprodukt (I),
0–30% anionische Dispergiermittel und
0–70% Wasser und/oder übliche Hilfsmittel.

5. Zubereitungen nach Anspruch 2 bis 4, enthaltend
30–80% Dispersionsfarbstoff,
3–12% Anlagerungsprodukt (I),
0–4% anionische Dispergiermittel und
4–67% Wasser und/oder Hilfsmittel.

6. Zubereitungen nach Anspruch 2 bis 4, enthaltend
65–80% Dispersionsfarbstoff,
5–18% Anlagerungsprodukt (I) und
7–30% anionische Dispergiermittel.

7. Zubereitungen nach Anspruch 2 bis 6, dadurch gekennzeichnet, daß die Dispersionsfarbstoffe bei atmosphärischem Druck zwischen 150° und 220° C zu mindestens 60% unzersetzt sublimierbar sind.

**Claims**

1. Application of water-soluble products of the general formula (I)

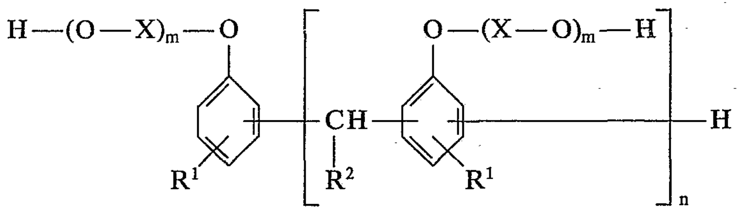

(I)

in which $R^1$ means a straight-chain or branched alkyl residue with 1 to 18 C-atoms, $R^2$ means a hydrogen atom or $R^1$, X means an ethylene and/or propylene residue, m means a number of from 6 to 100 and n means a number of from 1 to 12, as preparation agents for disperse dyestuffs.

2. Preparations of disperse dyestuffs, characterized by a content of a water-soluble addition product of the formula (I) according to claim 1.

3. Preparations according to claim 2, wherein $R^1$ means a straight-chain or branched alkyl residue with 6 to 14 C-atoms, $R^2$ means a hydrogen atom, X means an ethylene and/or propylene residue, m means a number of from 10 to 30 and n means a number of from 2 to 9.

4. Preparations according to claims 2 and 3, containing
5–90% disperse dyestuff,
2–40% addition product (I),
0–30% anionic dispersant and
0–70% water and/or usual adjuvants.

5. Preparations according to claims 2 to 4, containing
30–80% disperse dyestuff,
3–12% addition product (I),
0– 4% anionic dispersant and
4–67% water and/or adjuvants.

6. Preparations according to claims 2 to 4, containing
65–80% disperse dyestuff,
5–18% addition product (I) and
7–30% anionic dispersant.

7. Preparations according to claims 2 to 6, charqcterized in that the disperse dyestuffs are sublimable without deterioriation at atmospheric pressure between 150 and 220° C to at least 60%.

**Revendications**

1. L'utilisation de produits hydrosolubles de formule générale I ci-dessous

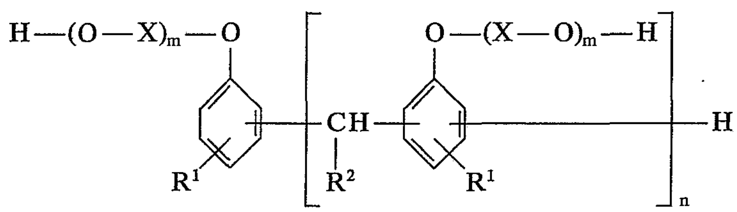

(I)

(dans laquelle le symbole $R^1$ représente un alkyle en $C_1-C_{18}$ à chaîne droite ou ramifiée, $R^2$ un atome d'hydrogène ou un radical tel que défini pour $R^1$, X un groupe éthylène et/ou propylène, m un nombre

de 6 à 100 et n un nombre de 1 à 12), pour obtenir des préparations de colorants de dispersion.

2. Préparations de colorants de dispersion caractérisées en ce qu'elles contiennent un produit d'addition hydrosoluble de formule I selon la revendication 1.

3. Préparations selon la revendication 2 dans lesquelles, dans le produit de formule I, $R^1$ est un alkyle en $C_6$ à $C_{14}$ à chaîne droite ou ramifiée, $R^2$ un atome d'hydrogène, X un groupe éthylène et/ou propylène, m un nombre de 10 à 30 et n un nombre de 2 à 9.

4. Préparations selon la revendication 2 ou 3, qui vontiennent:
5 à 90% du colorant de dispersion,
2 à 40% du produit d'addition (I),
0 à 30% d'un dispersant anionique et
0 à 70% d'eau et/ou de produits auxiliaires courants.

5. Préparations selon l'une quelconques des revendications 2 à 4, qui contiennent:
30 à 80% du colorant de dispersion,
3 à 12% du produit d'addition (I),
0 à 4% d'un dispersant anionique et
4 à 67% d'eau et/ou de produits auxiliaires courants.

6. Préparations selon l'une quelconque des revendication 2 à 4, qui contiennent:
65 à 80% du colorant de dispersion,
5 à 18% do produit d'addition (I) et
7 à 30% d'un dispersant anionique.

7. Préparations selon l'une quelconque des revendications 2 à 6, caractérisées en ce que les colorants de dispersion qu'elles contiennent sont sublimables à raison d'au moins 60% à la pression atmosphérique entre 150 et 220° C.